# EUROPEAN PATENT APPLICATION

(11) **EP 4 693 857 A1**
(43) Date of publication of application: **11.02.2026**
(21) Application number: 24197416.1
(22) Date of filing: 29.08.2024
(51) Int. Cl.: H02M 1/00, H02J 7/00, H02J 7/02, H05B 45/34, H05B 45/395, H05B 47/10, H05B 47/19

(54) **A SINGLE-LIVE-WIRE INTELLIGENT LOW-POWER DIMMER**

(30) Priority: 08.08.2024 CN 202411080970
(71) Applicant: Shenzhen Shyugj Technology Co., Ltd., Shenzhen Guangdong (CN)
(72) Inventor: Huang, Zhican, Shenzhen (CN); Yao, Bin, Shenzhen (CN); Huang, Leiyang, Shenzhen (CN)
(74) Representative: Siecker, Eric Johannes

(57) **Abstract**

This invention discloses a single live wire intelligent low power dimmer, including live wire input terminal, live wire output terminal, AC-DC rectifier voltage stabilizing circuit, microcomputer chip, charging power control circuit, charging circuit, supercapacitor energy storage circuit and RF module. The live wire input terminal and the live wire output terminal are respectively connected to the input end of the AC-DC rectifier voltage stabilizing circuit. The output end of the AC-DC rectifier voltage stabilizing circuit is respectively connected to the microcomputer chip and the charging power control circuit. The charging power control circuit is also respectively connected to the microcomputer chip and the charging circuit. The supercapacitor energy storage circuit is respectively connected to the charging circuit and the RF module. The RF module is also connected to the microcomputer chip. The charging power control circuit controls whether the charging circuit charges the supercapacitor energy storage circuit according to the level signal sent by the microcomputer chip. The single live wire intelligent low power dimmer provided by this invention not only meets low power consumption, but also maintains a simple single live wire wiring method, and has high versatility.

## Description

### TECHNICAL FIELD

The invention pertains to the field of dimmer technology and specifically relates to a single-live-wire intelligent low-power dimmer.

### BACKGROUND ART

Single-live-wire AC dimmers are widely used in regions such as Europe, America, Australia, and South Africa. The purpose of dimmers is to meet the need for different light intensities in various home settings, reducing lighting electricity consumption to achieve energy saving and emission reduction, thereby addressing the urgent issue of global warming. With societal development and technological progress, various types of intelligent dimmers (such as Zigbee, Zwave, FIWI, Matter over Thread, Matter over WI-FI, etc.) have been invented, bringing a low-carbon society and technological convenience to humanity.

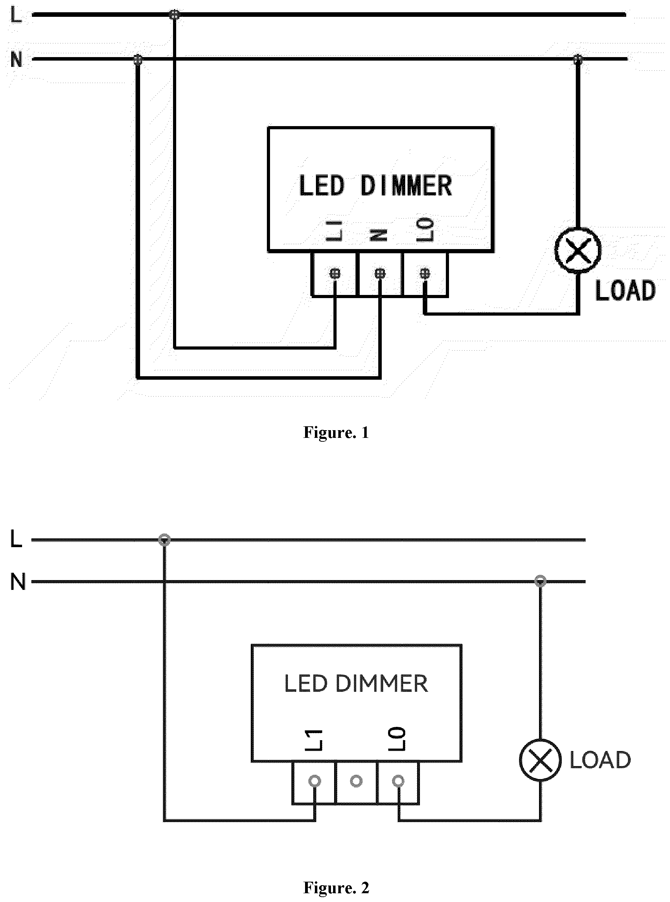

Currently, the market's intelligent dimmers mainly have two wiring methods: one requires both the neutral wire and the live wire to be connected, referred to as a zero-live intelligent dimmer (as shown in Figure 1), and the other requires only the live wire to be connected, referred to as a single-live-wire intelligent dimmer (as shown in Figure 2).

The disadvantages of the zero-live-wire intelligent dimmer wiring method are:
1. Complex wiring: it requires connecting the neutral wire to the dimmer, increasing wiring difficulty.
2. Most countries' existing lighting switches and dimmers are wired with a single live wire, preventing direct replacement of the original products without changing the existing wiring layout, affecting market share.
3. Due to the presence of RF modules (especially in WI-FI protocol dimmers), standby power consumption is relatively high, mostly exceeding 0.7W, with some reaching over 1W. These products do not conform to the new global trend of promoting energy saving, emission reduction, and a low-carbon, environmentally friendly green society.

The single-live-wire intelligent dimmer wiring method (as shown in Figure 2) is the current mainstream dimmer wiring method. However, due to the RF modules (especially in WI-FI protocol dimmers), the standby power consumption is relatively high, mostly exceeding 0.7W, with some reaching over 1W. High standby power consumption has the same drawback as the third point of zero-live-wire dimmer products (non-compliance with the new global trend of promoting energy saving, emission reduction, and a low-carbon, environmentally friendly green society). Another drawback is that the high standby power consumption imposes certain requirements on the load power due to the single-live-wire wiring method. If the load power is too low, the dimmer cannot be turned off in the shutdown state because the system's standby current can only pass through the load as the sole channel, leading to many low-power lighting fixtures (especially those below 8W) that cannot be turned off, greatly reducing the dimmer's versatility and affecting market share.

### SUMMARY

To overcome the problems of complex wiring, high standby power consumption, and unsuitability for low-power lighting fixtures in existing intelligent dimmers, the invention provides a single-live-wire intelligent low-power dimmer.

The technical solution of the invention is as follows:
A single-live-wire intelligent low-power dimmer, characterized by comprising a live wire input terminal, a live wire output terminal, an AC-DC rectification and voltage regulation circuit, a microcomputer chip, a charging power control circuit, a charging circuit, a farad capacitor energy storage circuit, and an RF module. The live wire input terminal and live wire output terminal are respectively connected to the input end of the AC-DC rectification and voltage regulation circuit. The output end of the AC-DC rectification and voltage regulation circuit is respectively connected to the microcomputer chip and the charging power control circuit. The charging power control circuit is also connected to the microcomputer chip and the charging circuit. The farad capacitor energy storage circuit is connected to the charging circuit and the RF module. The RF module is also connected to the microcomputer chip. The charging power control circuit controls whether the charging circuit charges the farad capacitor energy storage circuit based on the level signal sent by the microcomputer chip.

In a preferred embodiment of the invention:
- When the charging power control circuit receives the first level signal sent by the microcomputer chip, it controls the charging circuit to charge the farad capacitor energy storage circuit.
- When the charging power control circuit receives the second level signal sent by the microcomputer chip, it controls the charging circuit to stop charging the farad capacitor energy storage circuit and allows the farad capacitor energy storage circuit to solely power the RF module.

In another preferred embodiment:
- The microcomputer chip sends the first level signal to the charging power control circuit when it is first powered on or in a startup state.
- The microcomputer chip sends the second level signal to the charging power control circuit when it is in a shutdown state.

In other preferred embodiments:
- The AC-DC rectification and voltage regulation circuit output end is connected to the microcomputer chip through an LDO voltage regulation circuit.
- The farad capacitor energy storage circuit is connected to the RF module through a DC-DC circuit.
- The farad capacitor energy storage circuit is connected to the microcomputer chip through an energy storage voltage monitoring circuit.
- The MOSFET power switch circuit is connected to the live wire input terminal, live wire output terminal, and the output end of the MOSFET drive circuit, with the input end of the MOSFET drive circuit connected to the microcomputer chip.
- The RF module is connected to the microcomputer chip through an RF power control circuit.
- The charging power control circuit includes transistors Q10 and Q11, resistors R70, R71, R72, and R73, with specific connections as described in the detailed implementation.

In yet another preferred embodiment:
- The charging circuit includes a charging chip U5, LDO linear regulator U6, capacitors C6, C7, C8, C24, C26, resistors R38, R39, R40, R41, with specific connections as described in the detailed implementation.

In another preferred embodiment:
- The farad capacitor energy storage circuit includes a farad capacitor EV, capacitor C25, resistor R4, with specific connections as described in the detailed implementation.

Advantages Over Existing Technology:
1. Utilizing the energy storage characteristics of the farad capacitor and a clever combination of hardware and software, the single-live-wire intelligent low-power dimmer achieves a standby power consumption of less than 0.3W, meeting low power consumption requirements while maintaining a simple single-live-wire wiring method. This meets the market demand for intelligent dimmers suitable for low-power lighting loads, enhancing product versatility and significantly increasing market share.
2. By charging the farad capacitor during startup and stopping charging during shutdown, the single-live-wire intelligent low-power dimmer avoids increased standby power consumption due to charging currents during shutdown.

### BRIEF DESCRIPTION OF THE DRAWINGS

In order to explain the technical solutions of the embodiments of the present invention more clearly, a brief introduction of the accompanying drawings required for the description of the embodiments or the prior art is given below. It is evident that the drawings described below are merely some embodiments of the present invention. For those skilled in the art, other drawings can be obtained based on these drawings without any creative effort.
Figure 1. wiring diagram of an existing zero-fire intelligent dimmer;
Figure 2. wiring diagram of an existing single-fire intelligent dimmer;
Figure 3. schematic block diagram of a single-fire intelligent low-power dimmer in an embodiment of the present invention;
Figure 4. schematic circuit diagram of the AC-DC rectifier voltage stabilizing circuit in an embodiment of the present invention;
Figure 5. schematic circuit diagram of the charging power control circuit in an embodiment of the present invention;
Figure 6. schematic circuit diagram of the charging circuit in an embodiment of the present invention;
Figure 7. schematic circuit diagram of the supercapacitor energy storage circuit in an embodiment of the present invention;
Figure 8. schematic circuit diagram of the LDO voltage stabilizing circuit in an embodiment of the present invention;
Figure 9. schematic circuit diagram of the DC-DC circuit in an embodiment of the present invention;
Figure 10. schematic circuit diagram of the energy storage voltage monitoring circuit in an embodiment of the present invention;
Figure 11. schematic circuit diagram of the RF power control circuit in an embodiment of the present invention.

### DETAILED DESCRIPTION

To make the technical problems to be solved, technical solutions, and beneficial effects of the present invention clearer, the present invention is further detailed below in conjunction with the accompanying drawings and embodiments. It should be noted that similar reference numbers and letters represent similar items in the following drawings. Therefore, once an item is defined in one drawing, it does not need to be further defined and explained in subsequent drawings. At the same time, it is declared that the described embodiments are only for explaining the present invention and not for limiting it.

It should be noted that the terms "connect" and the like should be understood in a broad sense. For example, it can be a fixed connection, a detachable connection, or integrated; it can be a mechanical connection or an electrical connection; it can be directly connected, or indirectly connected through an intermediate medium, it can be an internal communication between two elements or an interaction relationship between two elements unless otherwise specified. The orientation or positional relationship indicated is based on the orientation or positional relationship shown in the drawings, or the conventional placement of the product when used, or the orientation or positional relationship commonly understood by those skilled in the art, or the conventional placement of the product when used, and is merely for the convenience of describing the present application and simplifying the description, rather than indicating or implying that the indicated device or element must have a specific orientation or be constructed and operated in a specific orientation, and therefore cannot be understood as a limitation to the present application.

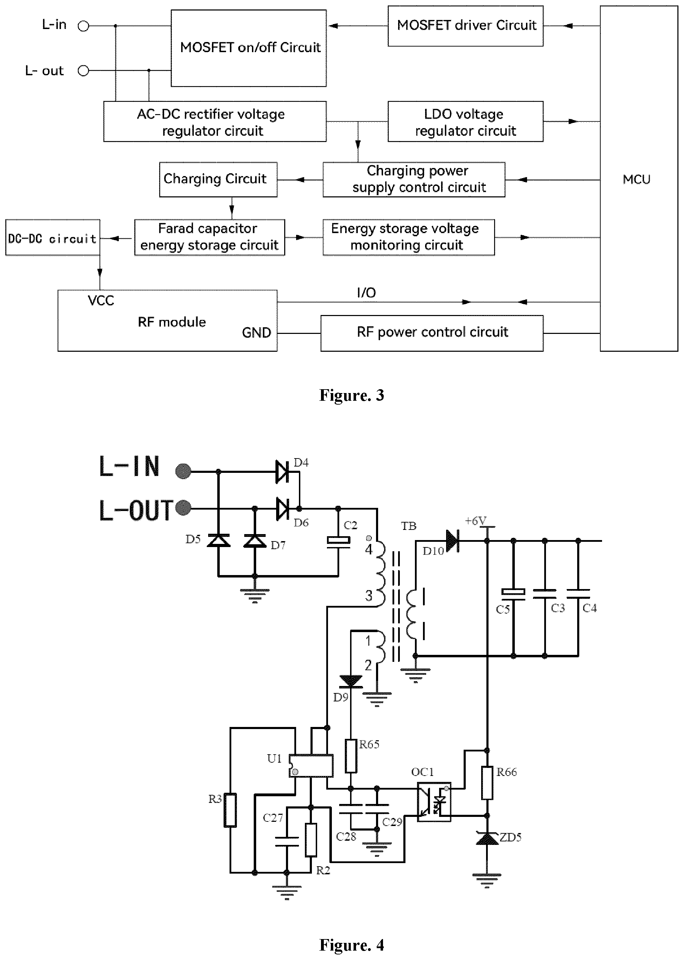

Please refer to Figure 3. This embodiment provides a single-fire intelligent low-power dimmer, including a live wire input terminal L-IN, a live wire output terminal L-OUT, an AC-DC rectifier voltage stabilizing circuit, a microcomputer chip MCU, a charging power control circuit, a charging circuit, a supercapacitor energy storage circuit, and an RF module. The live wire input terminal L-IN and the live wire output terminal L-OUT are respectively connected to the input end of the AC-DCgrectifier voltage stabilizing circuit. The output end of the AC-DC rectifier voltage stabilizing circuit is respectively connected to the microcomputer chip MCU and the charging power control circuit. The charging power control circuit is also connected to the microcomputer chip MCU and the charging circuit, respectively. The supercapacitor energy storage circuit is connected to the charging circuit and the RF module, respectively, and the RF module is also connected to the microcomputer chip MCU.

The power is taken from the live wire input terminal L-IN and the live wire output terminal L-OUT, and the voltage is regulated after rectification and voltage reduction by the AC-DC rectifier voltage stabilizing circuit; after voltage regulation, the power is supplied in two ways: one way is to supply power to the microcomputer chip MCU, and the other way is to charge the supercapacitor EV of the supercapacitor energy storage circuit through the charging circuit. After the supercapacitor EV is charged and stored, it supplies power to the RF module. The microcomputer chip MCU sends a first level signal to the charging power control circuit when the power is just turned on or in the power-on state and sends a second level signal to the charging power control circuit in the power-off state. When the charging power control circuit receives the first level signal sent by the microcomputer chip MCU, it controls the charging circuit to charge the supercapacitor energy storage circuit. When the charging power control circuit receives the second level signal sent by the microcomputer chip MCU, it controls the charging circuit to stop charging the supercapacitor energy storage circuit and allows the supercapacitor energy storage circuit to supply power to the RF module alone. Since the main power circuit does not participate in supplying power to the RF module, the standby power consumption of the dimmer is greatly reduced, achieving a standby power consumption of less than 0.3W, which is far superior to most single-fire intelligent dimmers on the market with power consumption greater than 0.8W.

The single-fire intelligent low-power dimmer of the present invention only has two wires for input and output, does not require a neutral wire (N wire), and is simple and efficient to wire. To reduce the power consumption of the dimmer, using a dry battery to independently supply power to the RF module is also one of the solutions, but dry battery power not only increases the cost, but also makes the structure and assembly more complex, increases the product size, shortens the battery life, causes environmental pollution due to waste batteries, and increases certification costs for battery-equipped products. The single-fire intelligent low-power dimmer of the present invention perfectly solves the problem of large standby power consumption by using the energy storage characteristic of the supercapacitor. The supercapacitor has 100,000 charge and discharge cycles, and the charging and discharging speed of the supercapacitor is faster. Generally, it can achieve 95% of the rated capacity charging in about ten to twenty seconds. That is, the supercapacitor has a long life, small size, fast charging, and shows the advantages of the product without changing the product structure and with little increase in cost.

Please refer to Figure 4. The AC-DC rectifier voltage stabilizing circuit includes diodes D4, D5, D6, D7, and D10, capacitors C2, C3, C4, and C5, transformer TB, and other core power components. The AC signal is rectified by diodes D4-D7, filtered by capacitor C2, and then transformed by the core power components such as transformer TB. The secondary side of the transformer is rectified by diode D10 and filtered by capacitors C2-C5 to provide stable voltage and current to the entire machine. The voltage and current rectified and filtered by diode D10 and components such as capacitors C2-C5 are divided into two ways, one way is to supply power to the core component of the dimmer, the microcomputer chip MCU, and the other way is to supply power to the most critical supercapacitor energy storage circuit of the dimmer.

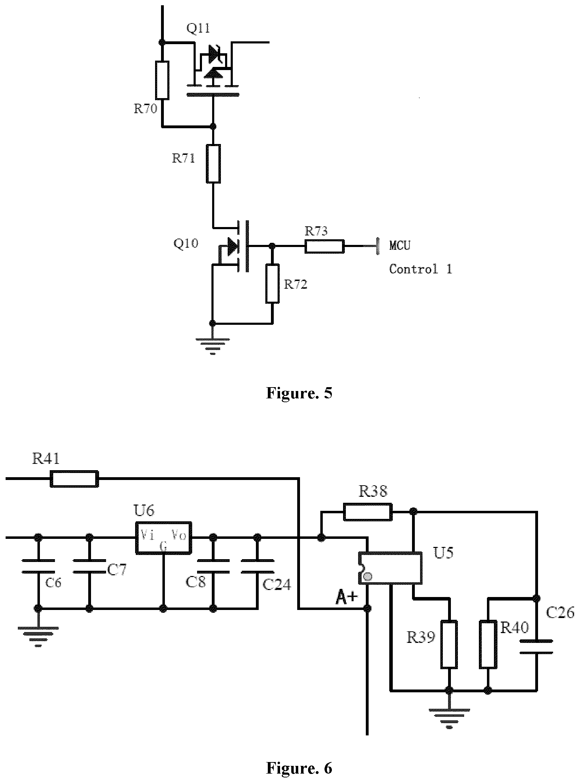

Please refer to Figure 5. The charging power control circuit includes transistors Q10 and Q11, resistors R70, R71, R72, and R73. The first end of transistor Q11 is connected to one end of resistor R70 and the output end of the AC-DC rectifier voltage stabilizing circuit. The second end of transistor Q11 is connected to the input end of the charging circuit. The third end of transistor Q 11 is connected to the other end of resistor R70 and one end of resistor R71. The first end of transistor Q10 is connected to the other end of resistor R71. The second end of transistor Q 10 is connected to one end of resistor R72 and ground. The third end of transistor Q 10 is connected to the other end of resistor R72 and one end of resistor R73. The other end of resistor R73 is grounded. The charging power control circuit forms the switch channel of the supercapacitor energy storage circuit through the transistors Q10 and Q11 and resistors R70, R71, R72, and R73. The charging power control circuit can achieve precise control of the charging function of the charging circuit with a small number of transistors and resistor components, reducing the circuit complexity, lowering the failure rate, and improving the reliability of the circuit. In addition, due to the small number of components and simple connections, the charging power control circuit is easy to debug and maintain. When a fault occurs, it can quickly locate and solve the problem.

Please refer to Figure 6. The charging circuit includes a charging chip U5, an LDO linear regulator U6, capacitors C6, C7, C8, C24, and C26, and resistors R38, R39, R40, and R41. The first end of the LDO linear regulator U6 is connected to one end of capacitor C6, one end of capacitor C7, and the output end of the charging power control circuit. The second end of the LDO linear regulator U6 is connected to one end of capacitor C8, one end of capacitor C24, one end of resistor R38, and the first end of the charging chip U5. The other ends of capacitors C6, C7, C8, and C24 are all grounded. The second end of the charging chip U5 is connected to one end of resistor R39. The other end of resistor R39 is connected to the input end of the supercapacitor energy storage circuit. The charging circuit forms a stable voltage output channel to charge the supercapacitor through the charging chip U5 and the LDO linear regulator U6. When charging, the output voltage is stable and smooth, avoiding the damage caused by overvoltage and undervoltage to the supercapacitor. During charging, the LDO linear regulator U6 can convert the voltage and current of the AC-DC rectifier voltage stabilizing circuit into a stable DC voltage output through the charging chip U5, ensuring the long-term and reliable operation of the supercapacitor energy storage circuit.

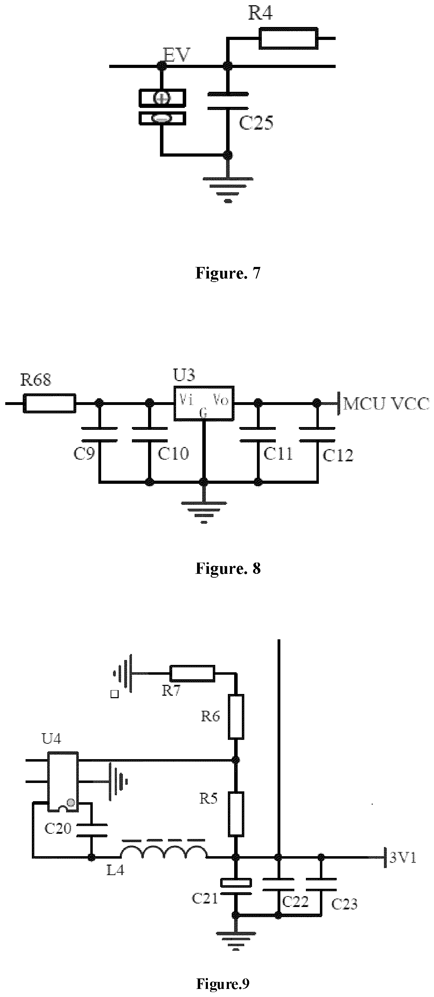

Referring to Figure 7, the Faraday capacitor energy storage circuit includes a Faraday capacitor EV, a capacitor C25, and a resistor R4. One end of the Faraday capacitor EV is connected to one end of the capacitor C25, one end of the resistor R4, and the output end of the charging circuit. The other end of the Faraday capacitor EV is connected to the other end of the capacitor C25 and ground, while the other end of the resistor R4 is connected to the RF module. This configuration of the Faraday capacitor energy storage circuit has a small number of components, simple connections, low cost, and is easy to debug and maintain.

The working principle of the aforementioned charging power control circuit, charging circuit, and Faraday capacitor energy storage circuit is as follows:
When the dimmer is first turned on or in a startup state, the microcontroller unit (MCU) outputs a first level signal (high level) to the transistor Q10, causing transistors Q10 and Q11 to conduct. The current flows through transistor Q11, the LDO linear regulator U6, and the charging chip U5 to charge the Faraday capacitor EV When the dimmer is turned off, the MCU outputs a second level signal (low level) to transistor Q10, causing transistors Q10 and Q11 to cut off, and the charging chip U5 stops charging the Faraday capacitor EV Since the Faraday capacitor EV independently supplies power to the RF module, it achieves the purpose of not consuming the main power current when the dimmer is off.

Referring to Figures 3 and 8, in one embodiment, the single-fire intelligent low-power dimmer further includes an LDO voltage regulator circuit. The output end of the AC-DC rectifier voltage regulator circuit is connected to the MCU through the LDO voltage regulator circuit. Specifically, the LDO voltage regulator circuit includes an LDO linear regulator U3, a resistor R68, capacitors C9, C10, C11, and C12. The first end of the LDO linear regulator U3 is connected to one end of the resistor R68, one end of the capacitor C9, and one end of the capacitor C10. The other end of the resistor R68 is connected to the output end of the AC-DC rectifier voltage regulator circuit. The second end of the LDO linear regulator U3 is connected to one end of the capacitors C11, C12, and the MCU. The third end of the LDO linear regulator U3 is connected to the other ends of capacitors C9, C10, C11, and C12, and to ground. The voltage and current rectified and filtered by the diode D10 and capacitors C2-C5 of the AC-DC rectifier voltage regulator circuit are supplied to the MCU after current limiting by resistor R68 and voltage regulation by the LDO linear regulator U3. The LDO linear regulator U3, through its internal feedback mechanism and control circuit, can maintain the stability of the output voltage, ensuring that the MCU can obtain a stable supply voltage even with input voltage fluctuations or load changes, thereby guaranteeing the normal operation and reliability of the dimmer.

Referring to Figures 3 and 9, in one embodiment, the single-fire intelligent low-power dimmer further includes a DC-DC circuit. The Faraday capacitor energy storage circuit is connected to the RF module through the DC-DC circuit. After energy storage by the Faraday capacitor EV, the required supply voltage for the RF module can be provided more efficiently by reducing and stabilizing the voltage through the DC-DC circuit, reducing energy loss.

Specifically, the DC-DC circuit includes an LDO linear regulator U4, an inductor L4, capacitors C20, C21, C22, and C23, and resistors R5, R6, and R7. The current supplied by the Faraday capacitor EV is regulated and stabilized by components such as the LDO linear regulator U4, inductor L4, resistors R5-R7, and capacitors C21-C23 before being supplied to the RF module. This DC-DC circuit setup can adapt to a wide range of input and output voltages, allowing it to provide a stable supply voltage to the RF module under different operating conditions, improving the adaptability and reliability of the dimmer.

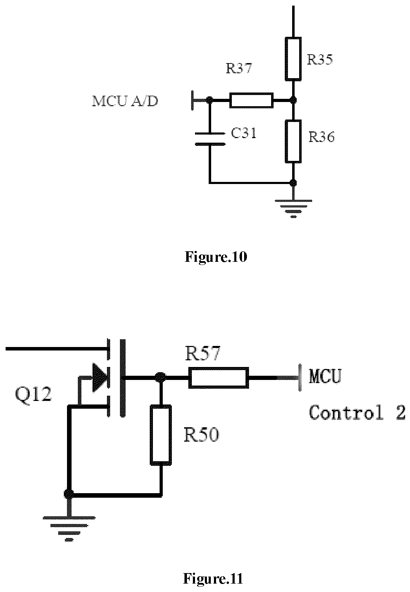

Referring to Figures 3 and 10, in one embodiment, the single-fire intelligent low-power dimmer further includes an energy storage voltage monitoring circuit. The Faraday capacitor energy storage circuit is connected to the microcontroller unit (MCU) through the energy storage voltage monitoring circuit. By real-time monitoring of the voltage status of the Faraday capacitor energy storage circuit, it ensures that the Faraday capacitor energy storage circuit operates within a safe voltage range, preventing overcharging or over-discharging from damaging the Faraday capacitor EV and the entire circuit. It also allows timely detection and response to abnormal situations in the circuit, such as voltage fluctuations or sudden power outages, thereby improving the stability and reliability of the entire system.

Specifically, the energy storage voltage monitoring circuit includes resistors R35, R36, and R37, and capacitor C31. One end of resistor R35 is connected to the input end of the Faraday capacitor energy storage circuit, while the other end of resistor R35 is connected to one end of resistor R36 and one end of resistor R37. The other end of resistor R36 is connected to one end of capacitor C31 and to ground. The other end of resistor R37 is connected to the other end of capacitor C32 and to the MCU. The aforementioned energy storage voltage monitoring circuit has few components and simple connections, making it cost-effective, easy to debug, and maintain.

Referring to Figure 3, in one embodiment, the single-fire intelligent low-power dimmer further includes a MOS power switch circuit and a MOS drive circuit. The MOS power switch circuit is connected to the live wire input end L-IN, the live wire output end L-OUT, and the output end of the MOS drive circuit. The input end of the MOS drive circuit is connected to the MCU. The MOS drive circuit amplifies the PWM signal output by the MCU, allowing it to drive the MOS power switch circuit to control the on-off of the current, thereby controlling the dimmer's power on and off.

Referring to Figures 3 and 11, in one embodiment, the single-fire intelligent low-power dimmer further includes an RF power control circuit. The RF module is connected to the MCU through the RF power control circuit. The MCU can control the power supply of the RF module through the RF power control circuit, such as turning off the RF module's power when communication is not needed to reduce the overall energy consumption of the dimmer.

Specifically, the RF power control circuit includes transistor Q12, resistor R50, and resistor R57. The first end of transistor Q12 is connected to the RF module, while the second end of transistor Q12 is connected to one end of resistor R50 and to ground. The third end of transistor Q12 is connected to the other end of resistor R50 and one end of resistor R57. The other end of resistor R57 is connected to the MCU. The aforementioned RF power control circuit has few components and simple connections, making it cost-effective, easy to debug, and maintain.

It should be understood that for those skilled in the art, improvements or modifications can be made based on the above description, and all such improvements and modifications should fall within the protection scope of the appended claims of the present invention.

The above exemplary description of the patent of the present invention is made in conjunction with the accompanying drawings. It is apparent that the implementation of the patent of the present invention is not limited to the above methods. Various improvements made using the method concept and technical solutions of the patent of the present invention, or the direct application of the concept and technical solutions of the patent of the present invention to other occasions without improvements, are within the protection scope of the present invention.

## Claims

1. A single live wire intelligent low power dimmer, **characterized by** including a live wire input terminal, a live wire output terminal, an AC-DC rectifier voltage stabilization circuit, a microcomputer chip, a charging power control circuit, a charging circuit, a Faraday capacitor energy storage circuit, and an RF module. The live wire input terminal and the live wire output terminal are respectively connected to the input end of the AC-DC rectifier voltage stabilization circuit, the output end of the AC-DC rectifier voltage stabilization circuit is respectively connected to the microcomputer chip and the charging power control circuit, the charging power control circuit is also respectively connected to the microcomputer chip and the charging circuit, the Faraday capacitor energy storage circuit is respectively connected to the charging circuit and the RF module, the RF module is also connected to the microcomputer chip, and the charging power control circuit controls whether the charging circuit charges the Faraday capacitor energy storage circuit according to the level signal sent by the microcomputer chip.

2. The single live wire intelligent low power dimmer according to claim 1, **characterized in that** when the charging power control circuit receives a first level signal sent by the microcomputer chip, the charging power control circuit controls the charging circuit to charge the Faraday capacitor energy storage circuit; when the charging power control circuit receives a second level signal sent by the microcomputer chip, the charging power control circuit controls the charging circuit to stop charging the Faraday capacitor energy storage circuit and allows the Faraday capacitor energy storage circuit to supply power to the RF module alone.

3. The single live wire intelligent low power dimmer according to claim 2, **characterized in that** the microcomputer chip sends the first level signal to the charging power control circuit when the power is just turned on or in the power-on state; the microcomputer chip sends the second level signal to the charging power control circuit in the power-off state.

4. The single live wire intelligent low power dimmer according to claim 1, **characterized by** further including an LDO voltage stabilization circuit, the output end of the AC-DC rectifier voltage stabilization circuit is connected to the microcomputer chip through the LDO voltage stabilization circuit.

5. The single live wire intelligent low power dimmer according to claim 1, **characterized by** further including a DC-DC circuit, the Faraday capacitor energy storage circuit is connected to the RF module through the DC-DC circuit.

6. The single live wire intelligent low power dimmer according to claim 1, **characterized by** further including an energy storage voltage monitoring circuit, the Faraday capacitor energy storage circuit is connected to the microcomputer chip through the energy storage voltage monitoring circuit.

7. The single live wire intelligent low power dimmer according to claim 1, **characterized by** further including a MOS power switch circuit and a MOS drive circuit, the MOS power switch circuit is respectively connected to the live wire input terminal, the live wire output terminal, and the output end of the MOS drive circuit, the input end of the MOS drive circuit is connected to the microcomputer chip.

8. The single live wire intelligent low power dimmer according to claim 1, **characterized in that** the charging power control circuit includes transistor Q10, transistor Q11, resistor R70, resistor R71, resistor R72, and resistor R73. The first end of transistor Q11 is respectively connected to one end of resistor R70 and the output end of the AC-DC rectifier voltage stabilization circuit, the second end of transistor Q11 is connected to the input end of the charging circuit, the third end of transistor Q11 is respectively connected to the other end of resistor R70 and one end of resistor R71, the first end of transistor Q10 is connected to the other end of resistor R71, the second end of transistor Q 10 is respectively connected to one end of resistor R72 and ground, the third end of transistor Q 10 is respectively connected to the other end of resistor R72 and one end of resistor R73, and the other end of resistor R73 is grounded.

9. The single live wire intelligent low power dimmer according to claim 1, **characterized in that** the charging circuit includes a charging chip U5, an LDO linear regulator U6, capacitors C6, C7, C8, C24, C26, and resistors R38, R39, R40, R41. The first end of the LDO linear regulator U6 is respectively connected to one end of capacitor C6, one end of capacitor C7, and the output end of the charging power control circuit. The second end of the LDO linear regulator U6 is respectively connected to one end of capacitor C8, one end of capacitor C24, one end of resistor R38, and the first end of the charging chip U5. The other end of capacitor C6, the other end of capacitor C7, one end of capacitor C8, and the other end of capacitor C24 are all grounded. The second end of the charging chip U5 is respectively connected to the other end of resistor R38, one end of resistor R40, and one end of capacitor C26. The third end of the charging chip U5 is respectively connected to one end of resistor R39. The fourth end of the charging chip U5 is respectively connected to the other end of resistor R39, the other end of resistor R40, the other end of capacitor C26, and ground. The fifth end of the charging chip U5 is respectively connected to one end of resistor R40 and the input end of the Faraday capacitor energy storage circuit. The other end of resistor R40 is connected to the output end of the AC-DC rectifier voltage stabilization circuit.

10. The single live wire intelligent low power dimmer according to claim 1, **characterized in that** the Faraday capacitor energy storage circuit includes a Faraday capacitor EV, capacitor C25, and resistor R4. One end of the Faraday capacitor EV is respectively connected to one end of capacitor C25, one end of resistor R4, and the output end of the charging circuit. The other end of the Faraday capacitor EV is connected to the other end of capacitor C25 and ground. The other end of resistor R4 is connected to the RF module.
